# FASCICULE DE BREVET EUROPEEN

(11) **EP 0 681 163 B1**
(45) Date de publication et mention de la délivrance du brevet: **25.08.1999**
(21) Numéro de dépôt: 95400367.9
(22) Date de dépôt: 21.02.1995
(51) Int. Cl.: G01F 3/08

(54) **Dispositif de mesure pour compteur de liquide à piston oscillant**
Ringkolben-Durchflussmesser
Oscillating piston flowmeter

(30) Priorité: 06.05.1994 FR 9405607
(43) Date de publication de la demande: 08.11.1995
(73) Titulaire: SAPPEL, 68304 Saint-Louis (FR)
(72) Inventeur: Munck, Christophe, F-75116 Paris (FR); Zimmermann, Aimé, F-75116 Paris (FR)
(74) Mandataire: Schmit, Christian Norbert Marie

(56) Documents cités:
- WO-A-93/22631
- US-A- 2 016 347

## Description

L'invention a trait au domaine des compteurs volumétriques de liquide et, en particulier, au domaine des compteurs volumétriques d'eau qui mettent en oeuvre une technique bien connue de l'homme du métier, reconnue pour sa précision et sa fiabilité : la technique du piston oscillant.

Les compteurs volumétriques d'eau à piston oscillant comportent un dispositif de mesure formé d'une chambre renfermant un piston maintenu mobile sur un fond plan, le long d'une cloison radiale, et entre une paroi cylindrique intérieure de ladite chambre et une paroi extérieure d'un petit cylindre de guidage formant un puits disposé au centre de son fond.

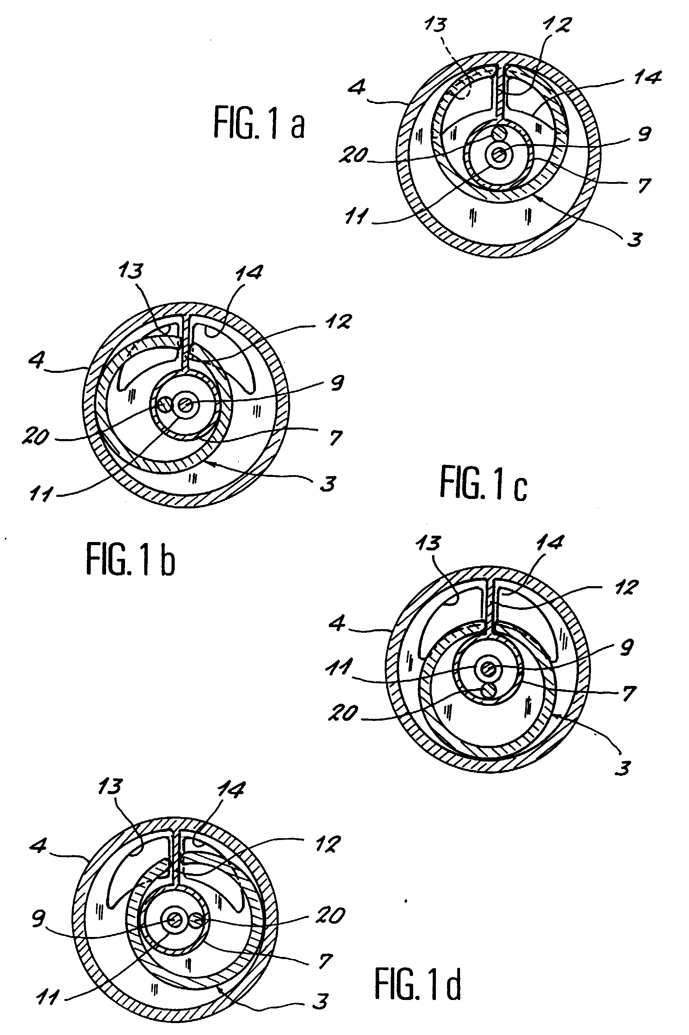

Le principe de fonctionnement de ces compteurs est illustré de manière schématique aux figures 1a à 1d qui décomposent les différentes étapes du mouvement du piston 3 dans la chambre 2. Pendant le comptage, l'eau pénètre dans le dispositif 1 par une lumière d'admission 13 disposée d'un côté de la cloison radiale 12. Cette eau emplit au maximum deux alvéoles d'admission situés en regard de la lumière d'admission 13. Un premier alvéole est formé par l'espace compris entre la paroi cylindrique extérieure du piston 3 et la paroi cylindrique intérieure de la chambre 2, et un second alvéole est formé par l'espace compris entre la paroi cylindrique extérieure du puits 7 et la paroi cylindrique intérieure du piston 3. L'eau à compter communique alors son énergie au piston 3 qui glisse sur le fond de la chambre 2 et oscille selon un mouvement caractéristique de la technique du piston oscillant, selon lequel l'axe du cylindre formant le piston 3 décrit un cercle autour de l'axe du cylindre formant la chambre 2. Un volume donné d'eau est ainsi conduit dans deux alvéoles d'échappement, en direction d'une lumière d'échappement 14 disposée de l'autre côté de la cloison 12. Ces alvéoles sont situés en regard de ladite lumière d'échappement 14 et sont formées, l'une par l'espace compris entre la paroi extérieure du piston 3 et la paroi intérieure de la chambre 2, et l'autre par l'espace compris entre la paroi extérieure du puits 7 et la paroi intérieure du piston 3. On a donc un mouvement en trois temps : l'admission, la translation d'un volume d'eau, et l'échappement. Ce mouvement est en trois temps doubles puisqu'il s'effectue simultanément, avec un déphasage de π à l'intérieur et à l'extérieur du piston 3.

L'eau en circulation dans des canalisations véhicule des particules solides en suspension. Ces particules proviennent parfois de dépôts calcaires qui se forment avec le temps dans les canalisations elles-mêmes, et qui se détachent de temps à autre, emportés par les eaux circulantes. D'autres fois, ces particules proviennent de dépôts d'oxyde de fer formés dans des canalisations métalliques. En outre, l'eau à compter transporte bien souvent d'autres particules encore, telles que des particules de sable ou, plus généralement, de matières siliceuses.

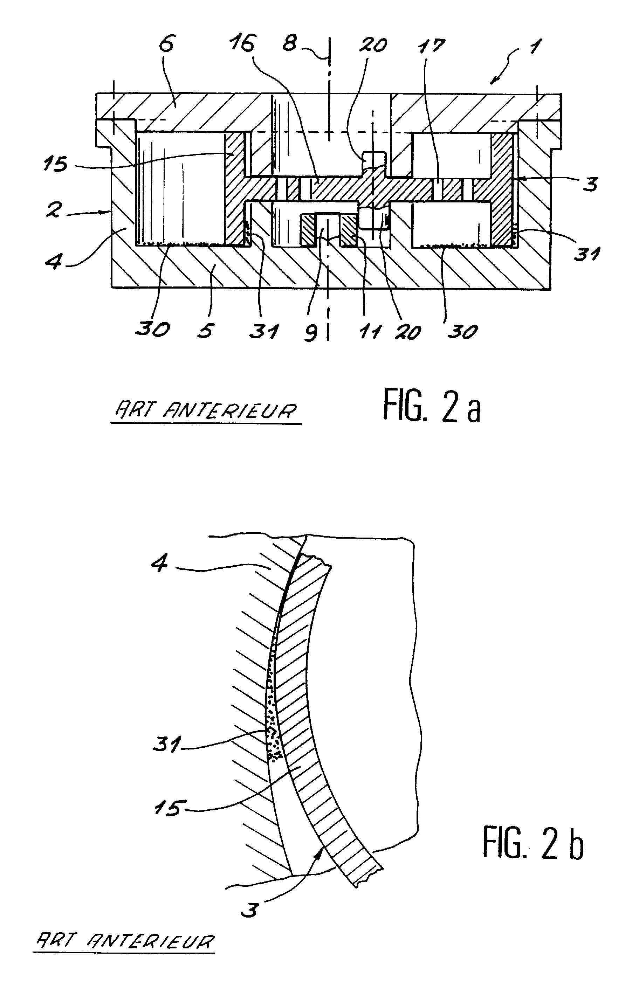

Lors d'un puisage, c'est-à-dire lorsqu'un abonné du service des eaux ouvre un robinet pour puiser la quantité d'eau qui lui est nécessaire à un moment donné, les particules en suspension dans l'eau s'introduisent dans le dispositif de comptage. Là, elles sont entraînées en rotation par le piston et suivent plus ou moins le parcours de l'eau jusqu'à la lumière d'échappement. Lorsque le puisage est terminé, le piston s'immobilise et les particules encore en suspension dans l'eau contenue dans le dispositif de mesure se déposent lentement au fond de la chambre car elles ont généralement un poids spécifique supérieur à celui de l'eau. Elles forment alors un dépôt concentré référencé 30 en figure 2a.

Lors du puisage suivant, ce dépôt concentré est repoussé par le piston 3 en rotation. Il migre alors naturellement en bas du dispositif, en partie contre la paroi intérieure de la chambre 2, et en partie contre la paroi extérieure du puits 7. Là, les particules s'accumulent et sont tassées en formant ainsi un coin 31 représenté en figure 2b qui est sans cesse entraîné par le piston 3, dans le sens d'avancement de celui-ci.

Les particules, et en particulier les particules de matière siliceuse qui sont très abrasives, rayent et détériorent définitivement les parois latérales internes de la chambre, les parois internes et externes du piston, et les parois externes du puits. Les frottements entre les différents éléments du dispositif sont alors plus intenses et les jeux existant entre le piston et la chambre sont accentués, ce qui accroit les fuites d'eau entre les alvéoles. La précision et la fiabilité du dispositif de mesure sont ainsi diminuées.

D'autre part, l'accumulation des particules 31 freine la rotation du piston 3 et fausse le comptage, en particulier quand ce piston oscille à bas régime et qu'il devient alors très sensible aux forces qui s'opposent à sa rotation. Les résultats erronés alors obtenus sont bien souvent situés hors des limites admissibles définies par les textes législatifs en vigueur dans la plupart des pays.

Par ailleurs, le coin 31 peut stopper la rotation du piston 3 et le bloquer. Dans ce cas, il faudra attendre un puisage à fort débit pour que l'eau introduite sous forte pression crée, dans le dispositif, suffisamment de turbulences pour disperser ce coin 31. Les particules solides sont alors à nouveau mises en suspension dans l'eau par le piston qui reprend sa course. Toutefois, elles restent en grande partie piégées dans le dispositif. Ce n'est qu'avec le temps et à la condition que l'eau introduite dans la chambre soit totalement claire, c'est-à-dire totalement exempte de particules, que toutes les particules seront éliminées. Dans le cas contraire, le blocage se reproduira probablement ultérieurement.

La présente invention a pour but de proposer un dispositif de mesure qui pallie à moindre coût les inconvénients précités et qui permette notamment d'éviter d'une part, la détérioration dudit dispositif par les particules solides introduites par le liquide à compter et, d'autre part le freinage et le blocage du piston, tout en offrant de bonnes performances métrologiques même à petit régime.

Ce but, ainsi que d'autres qui apparaîtront par la suite, sont atteints grâce à la présence, dans ce dispositif, d'une gorge de récupération des particules.

Aussi, l'invention propose un dispositif de mesure pour compteur de liquide à piston oscillant comportant :
- une chambre creuse percée de deux lumières et limitée par une paroi latérale cylindrique, un fond, et un couvercle ;
- un piston enfermé dans ladite chambre et maintenu mobile, le long d'une cloison, autour d'un puits ;
et caractérisé en ce qu'il comporte en outre :
- au moins une gorge, ménagée aux encoignures formées entre le fond et des éléments supportés par celui-ci, qui débouche dans le creux de la chambre, dans un espace formé entre le puits et les parois latérales, et qui est destinée à recevoir des dépôts de particules introduites dans ledit dispositif par le liquide à compter.

La description qui va suivre, permettra de mieux comprendre la manière dont l'invention peut être mise en pratique.

Elle doit être lue au regard des dessins annexés, dans lesquels :
- les figures 1a à 1d illustrent, de manière schématique, en coupe transversale et en vue de dessus, le principe de fonctionnement d'un dispositif de mesure pour compteur de liquide à piston oscillant de l'art antérieur ou de l'invention, indifféremment ;
- la figure 2a montre, en coupe longitudinale et en vue de côté, une accumulation de particules solides telle qu'elle existe dans des dispositifs de mesure de l'art antérieur ;
- la figure 2b montre, en coupe transversale et en vue de dessus, un détail d'une accumulation de particules solides telle qu'elle existe à la périphérie d'un piston d'un dispositif de mesure de l'art antérieur ;
- la figure 3 présente, en perspective éclatée, un dispositif de mesure selon l'invention ;
- la figure 4 présente, en coupe longitudinale, un dispositif de mesure selon l'invention ;
- les figures 5a à 5i montrent, en coupe transversale, différents profils de gorges d'un dispositif de mesure selon l'invention ;
- la figure 6 représente, en coupe transversale et en détail, le profil d'une gorge avantageusement mise en oeuvre dans un dispositif de mesure selon l'invention ; et
- la figure 7 illustre les résultats améliorés que peut atteindre un dispositif selon l'invention comparé à un dispositif de mesure de l'art antérieur.

Les figures 1a à 1d, 2a et 2b ayant été décrites dans le préambule ci-dessus, leur étude ne sera pas reprise ici. Néanmoins, ces figures font partie intégrante de la description de l'invention qui va suivre. Aussi, les mêmes références sont utilisées dans l'ensemble des figures 1 à 7.

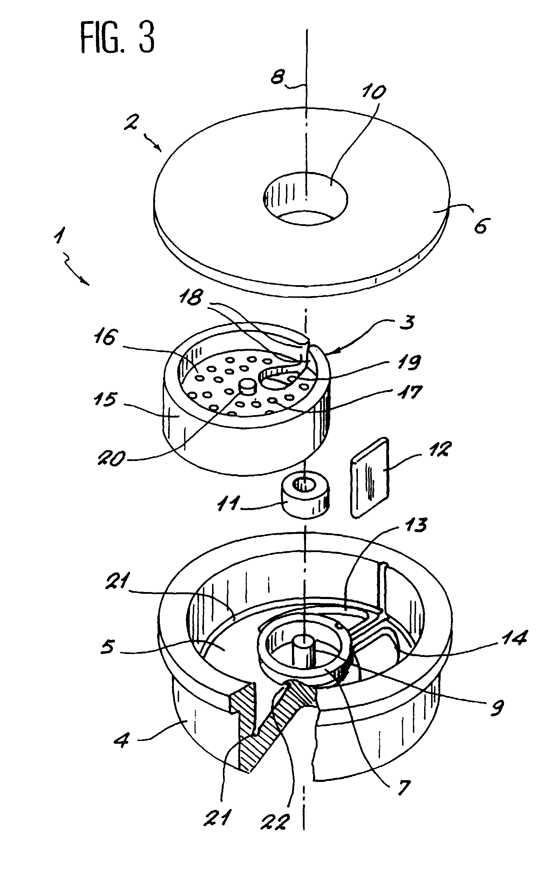

Sur la figure 3, on a représenté un dispositif de mesure 1 selon l'invention. Ce dispositif 1 comporte une chambre 2 et un piston 3.

La chambre 2 est creuse. Elle est limitée par une paroi latérale cylindrique 4, un fond circulaire plan 5 supportant cette paroi latérale 4, et un couvercle 6. Un petit cylindre ou puits 7, est supporté par le fond 5. Ce puits 7 est centré sur un axe 8 de la chambre 2 qui se matérialise, au centre du puits 7, par un téton central 9 sur lequel on a placé un galet tournant 11. Un autre petit cylindre 10 de même diamètre que le puits 7 est centré sur l'axe 8. Il est porté par le couvercle 6. Une cloison fixe 12 est disposée sur le côté interne de la paroi latérale 4 de la chambre 2 et se prolonge radialement sur toute la hauteur de cette paroi latérale 4, jusqu'aux petits cylindres 7, 10. Par ailleurs, le fond 5 de la chambre 2 est percé de deux lumières, une lumière d'admission 13 et une lumière d'échappement 14, disposées de chaque côté de la cloison 12.

Le piston 3 est supporté par le fond 5 de la chambre 2 dans laquelle il est enfermé. Il est formé d'un cylindre 15 divisé, en sa partie médiane, par une paroi plane 16 perforée de trous débouchant 17. Le diamètre du piston 3 est sensiblement inférieur au diamètre de la chambre 2. Une échancrure verticale 18 est ménagée le long d'une génératrice du cylindre 15 formant piston 3 et débouche, au niveau de la paroi plane 16, sur une ouverture 19 en forme de poire. La paroi plane 16 du piston 3 est munie, au centre de chacune de ses deux faces, d'un téton 20.

Quand le couvercle 6 de la chambre 2 est fermé, les bords des petits cylindres 7, 10 rejoignent la paroi plane 16 du piston 3, de manière à ce que ledit piston 3 demeure libre de mouvements plans. La cloison 12 est alors engagée entre les bords de l'échancrure 18 à l'intérieur de la poire 19. Aussi, quand le liquide à compter pénètre dans le dispositif 1 par la lumière d'admission 13, le piston 3 oscille dans la chambre 2, selon le mécanisme décrit dans le préambule et représenté de manière schématique aux figures 1a à 1d.

Le dispositif de mesure 1 comporte, au moins une gorge 21, 22 ménagée aux encoignures formées entre le fond 5 et différents éléments 3, 4, 7 qui sont perpendiculaires à ce fond 5. Ces éléments sont notamment, la paroi cylindrique intérieure 4 de la chambre 2 et la paroi cylindrique extérieure du puits 7. Cependant, selon une variante de réalisation non représentée sur les dessins, les parois cylindriques intérieure et extérieure du piston 3 peuvent aussi comporter une telle gorge.

Les gorges 21, 22 débouchent dans le creux de la chambre 2, dans un espace formé entre le puits 7 et les parois latérales 4, c'est-à-dire dans l'espace circulant de l'eau à compter où se déposent et s'accumulent les particules solides transportées introduites dans le dispositif 1.

Les gorges 21, 22 sont formées par exemple pendant l'usinage des chambres 2. Toutefois, elles peuvent être en outre obtenues dès l'injection de celles-ci.

La gorge référencée 21 est ménagée au bas de la paroi latérale cylindrique 4 de la chambre 2, à l'encoignure située entre le fond 5 et cette paroi 4.

La gorge référencée 22 est ménagée au bas de la paroi extérieure du puits 7, à l'encoignure située entre le fond 5 et cette paroi.

Les gorges 21, 22 sont ménagées sur l'entière périphérie des éléments 4, 7 qui les comportent, à l'exception du lieu où se situe la cloison 12.

Le profil des gorges 21, 22 est avantageusement constant le long de la périphérie des éléments 3, 4, 7. Néanmoins, ces gorges 21, 22 peuvent avoir des profils variés.

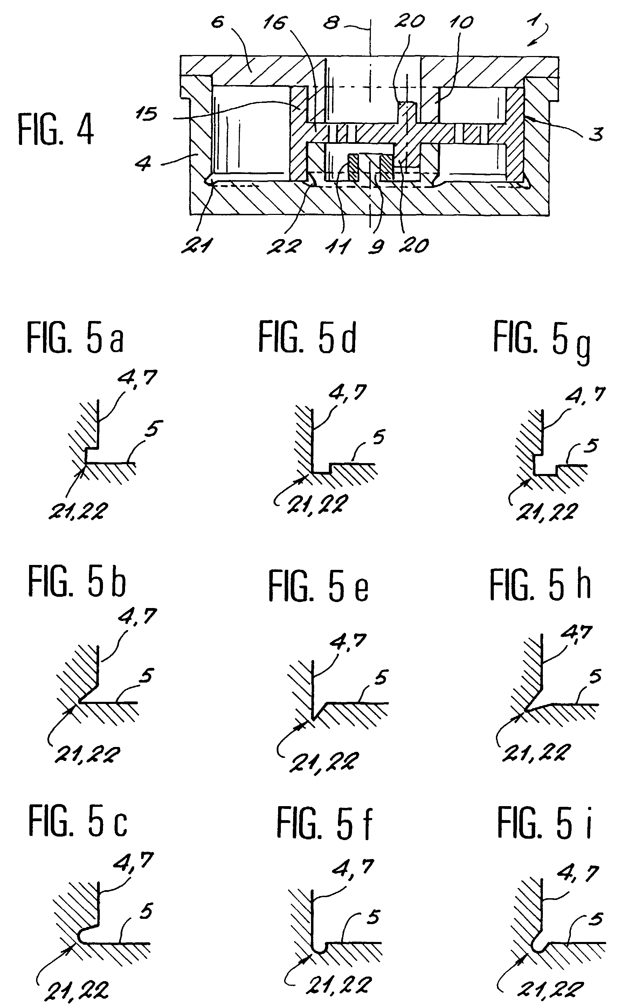

Les figures 5a à 5i montrent différents types de profils de gorges 21, 22 selon l'invention.

Dans les figures 5a, 5b et 5c, la gorge 21, 22 est ménagée dans l'élément 4, 7 perpendiculaire au fond 5 et uniquement dans cet élément. Le fond de la gorge peut alors être plan (figure 5a), concave (figure 5c), ou anguleux (figure 5b).

Par contre, dans les figures 5d, 5c, 5f la gorge est ménagée dans le fond 5 de la chambre 2 et uniquement dans ce fond 5. Là aussi, différents profils de gorge sont possibles et notamment les profils où son fond est plan (figure 5d), concave (figure 5f), ou anguleux (figure 5e).

Enfin, dans les figures 5g, 5h et 5i, la gorge 21, 22 est ménagée à la fois dans l'élément vertical 4, 7 supporté par le fond 5 et dans ce fond 5. Ici aussi, différents profils du fond de la gorge sont possibles et notamment le profil en angle à 90° (figure 5g), le profil en angle aigu (figure 5h) et le profil concave (figure 5i).

Bien entendu, toute combinaison des profils précités constitue un profil de gorge convenant à la mise en oeuvre de l'invention.

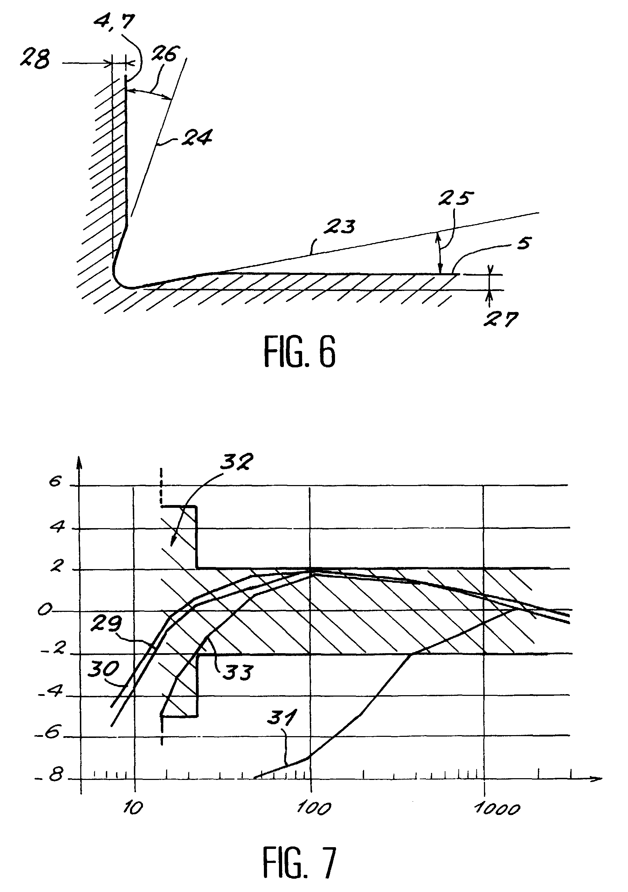

Néanmoins, certaines gorges 21, 22 conviennent mieux à la mise en oeuvre de l'invention que d'autres. C'est le cas de la gorge 21, 22 dont le profil est montré en figure 6 et qui est ménagée dans un dispositif 1 dont la chambre 2 a un diamètre d'environ 6 cm et une hauteur d'environ 3 cm. C'est une gorge de type 5i. Elle est formée à la fois dans la paroi verticale de l'élément 4, 7 et dans le fond 5. Son fond est concave selon un rayon de courbure d'environ 0,5 mm. Le profil de cette gorge 21, 22 est généré par deux droites 23 et 24, la première formant un angle 25 avec le fond 5 et la seconde formant un angle 26 avec la paroi 4, 7. L'angle 25 est de l'ordre de 10° et l'angle 26 est de l'ordre de 20°. En outre, la profondeur 27 de la gorge 21, 22 dans le fond 5 est d'environ 0,2 mm. Cette profondeur 27 est sensiblement égale à la profondeur 28 de l'entaille ménagée dans les parois verticales des éléments référencés 4 ou 7.

Les gorges 21, 22 constituent un canal qui génère, entre les différents alvéoles, des fuites de liquide susceptibles de perturber le comptage. Aussi, les dimensions des gorges 21, 22 sont suffisamment grandes pour que lesdites gorges produisent leurs effets, et suffisamment petites pour que les fuites dues à leur présence soient limitées et ne perturbent pas le comptage. Un rapport adéquat entre le volume total d'eau susceptible d'être contenu dans un dispositif de comptage et le volume total des gorges ménagées dans ce dispositif peut être compris entre 0,05 millièmes et 20 millièmes. De plus, les gorges sont avantageusement ménagées dans le fond 5 afin que les particules soient suffisamment maintenues en leur sein.

L'exemple de la figure 6 satisfait à ces conditions. En effet, si l'on se rapporte à la figure 7, on a des courbes de l'erreur, en pourcentage, sur le calcul du volume d'eau mesuré en fonction du débit d'eau, mesuré en litre par heure, introduit dans des dispositifs de mesure.

La première courbe référencée 29 est obtenue pour un dispositif de mesure de l'art antérieur dans lequel circule de l'eau claire, exempte de particules. La seconde courbe 30 est obtenue, en eau claire, pour un dispositif de mesure selon l'invention, muni de gorges 21, 22 dont le profil est celui de la figure 6. Une troisième courbe 31 est obtenue pour un dispositif de mesure de l'art antérieur qui comporte des particules en suspension. Enfin, une quatrième courbe 33 est obtenue avec une eau chargée en particules, pour un dispositif de mesure selon l'invention.

Les courbes 29 et 30 sont très voisines et, sur toute l'étendue de mesure, l'écart les séparant est inférieur à 1 %. En conséquence, les gorges 21, 22 ne constituent pas des canaux de fuite de liquide entre les alvéoles susceptibles de modifier sensiblement les résultats d'une mesure. La courbe 31 indique, aux petits débits, une erreur pouvant atteindre les 100 %. La courbe 31 sort de la zone hachurée 32 qui correspond à une zone d'admissibilité définie par certains textes législatifs actuels en matière de comptage des eaux. Ce n'est pas le cas de la courbe 33 qui, aux petits débits, indique une erreur de l'ordre de 3 % avec les courbes 29 et 30. L'amélioration apportée par l'invention est donc considérable et surprenante.

A la fin d'un premier puisage, les particules en suspension dans l'eau se déposent sur le fond 5. Lors d'un second puisage ces particules sont entraînées par le piston 3 qui les pousse jusqu'aux gorges 21, 22 où elles sont accumulées et tassées. Toutefois, les effets précités sont atténués lorsque les gorges sont réalisées sur le corps du piston 15. En effet, la gorge est alors mobile sur le fond 5, ce qui induit en fait une remise en suspension des particules dans le dispositif de mesure 1. Par ailleurs, les gorges 21, 22 sont vidées des particules qu'elles ont accumulées au cours des différents puisages par un puisage à fort débit à l'origine de turbulences suffisamment importantes pour remettre ces particules en suspension dans l'eau comptée.

## Revendications

1. Dispositif de mesure (1) pour compteur de liquide à piston oscillant (3) comportant :
- une chambre creuse (2) percée de deux lumières (13, 14) et limitée par une paroi latérale cylindrique (4), un fond (5), et un couvercle (6) ;
- un piston enfermé dans ladite chambre (2) et maintenu mobile, le long d'une cloison (12), autour d'un puits (7) ;
et caractérisé en ce qu'il comporte en outre :
- au moins une gorge (21, 22), ménagée aux encoignures formées entre le fond (5) et des éléments (3, 4, 7) supportés par celui-ci, qui débouche dans le creux de la chambre (2), dans un espace formé entre le puits (7) et les parois latérales (4), et qui est destinée à recevoir des dépôts de particules introduites dans ledit dispositif (1) par le liquide à compter.

2. Dispositif selon la revendication 1, caractérisé en ce qu'une gorge (21) est ménagée à l'encoignure formée entre le fond (5) et la paroi latérale cylindrique (4) de la chambre (2).

3. Dispositif selon la revendication 1, caractérisé en ce qu'une gorge (22) est ménagée à l'encoignure formée entre le fond (5) et la paroi extérieure du puits (7).

4. Dispositif selon l'une des revendications 1, 2, ou 3, caractérisé en ce que les gorges (21, 22) sont ménagées à la fois dans le fond (5) et dans les éléments (3, 4, 7) supportés par ce fond (5).

5. Dispositif selon l'une des revendications précédentes, caractérisé en ce que la gorge (21, 22) est ménagée sur l'entière périphérie des éléments (3, 4, 7) qui la comportent.

6. Dispositif selon l'une des revendications précédentes, caractérisé en ce que la gorge (21, 22) a un profil dont le fond est concave.

7. Dispositif selon l'une des revendications précédentes, caractérisé en ce que le volume des gorges (21, 22) rapporté au volume d'eau que peut contenir un dispositif (1) est compris entre 0,05 et 20 millièmes.

## Claims

1. Measuring device (1) for an oscillating-piston liquid meter (3), having:
- a hollow chamber (2) with two apertures (13, 14) in it and delimited by a cylindrical side wall (4), a base (5) and a cover (6);
- a piston enclosed in the said chamber (2) and held so as to be able to move, along a partition (12), around a well (7);
characterised in that it also has:
- at least one groove (21, 22), provided at the corners formed between the base (5) and elements (3, 4, 7) supported by it, which opens out in the hollow of the chamber (2), in a space formed between the well (7) and the side walls (4), which is intended to receive deposits of particles introduced into the said device (1) by the liquid to be metered.

2. Device according to Claim 1, characterised in that a groove (21) is provided at the corner formed between the base (5) and the cylindrical side wall (4) of the chamber (2).

3. Device according to Claim 1, characterised in that a groove (22) is provided at the corner formed between the base (5) and the external wall of the well (7).

4. Device according to one of Claims 1, 2 or 3, characterised in that the grooves (21, 22) are provided both in the base (5) and in the elements (3, 4, 7) supported by this base (5).

5. Device according to one of the preceding claims, characterised in the groove (21, 22) is provided over the entire periphery of the elements (3, 4, 7) which incorporate it.

6. Device according to one of the preceding claims, characterised in that the groove (21, 22) has a profile whose bottom is concave.

7. Device according to one of the preceding claims, characterised in that the volume of the grooves (21, 22) compared with the volume of water which a device (1) can contain is between 0.05 and 20 thousandths.

## Patentansprüche

1. Meßvorrichtung (1) für einen Flüssigkeitsmesser mit Schwingkolben (3), die umfaßt:
- eine Hohlkammer (2), die von zwei Öffnungen (13, 14) durchbrochen ist und von einer zylindrischen Seitenwand (4), einem Boden (5) und einem Deckel (6) begrenzt wird;
- einen in der Kammer (2) eingeschlossenen Kolben, der entlang einer zylindrischen, seitlichen Trennwand (12) um eine Bohrung (7) herum beweglich gehalten wird;
und dadurch gekennzeichnet, daß sie ferner umfaßt:
- mindestens eine Auskehlung (21, 22), die an den zwischen dem Boden (5) und von diesem getragenen Elementen (3, 4, 7) gebildeten Ecken vorgesehen ist, die in den Hohlraum der Kammer (2) in einem Raum mündet, der zwischen der Bohrung (7) und den Seitenwänden (4) gebildet wird und vorgesehen ist, Ablagerungen von Partikeln aufzunehmen, die von der zu messenden Flüssigkeit in die Vorrichtung (1) mit hineingetragen werden.

2. Vorrichtung nach Anspruch 1, dadurch gekennzeichnet, daß in der von dem Boden (5) und der zylindrischen Seitenwand (4) der Kammer (2) gebildeten Ecke eine Auskehlung (21) vorgesehen ist.

3. Vorrichtung nach Anspruch 1, dadurch gekennzeichnet, daß in der von dem Boden (5) und der Außenwand der Bohrung (7) gebildeten Ecke eine Auskehlung (22) vorgesehen ist.

4. Vorrichtung nach einem der Ansprüche 1, 2 oder 3, dadurch gekennzeichnet, daß die Auskehlungen (21, 22) sowohl in dem Boden (5) als auch in den von diesem Boden (5) getragenen Elementen (3, 4, 7) vorgesehen sind.

5. Vorrichtung nach einem der vorstehenden Ansprüche, dadurch gekennzeichnet, daß die Auskehlung (21, 22) auf dem gesamten Umfang der Elemente (3, 4, 7) vorgesehen ist, die sie umfassen.

6. Vorrichtung nach einem der vorstehenden Ansprüche, dadurch gekennzeichnet, daß die Auskehlung (21, 22) ein Profil aufweist, dessen Boden konkav ist.

7. Vorrichtung nach einem der vorstehenden Ansprüche, dadurch gekennzeichnet, daß das Volumen der Auskehlungen (21, 22) bezogen auf das Wasservolumen, das eine Vorrichtung (1) enthalten kann, 0,05 bis 20 Tausendstel beträgt.
